Europäisches Patentamt

European Patent Office

Office européen des brevets

(11) Veröffentlichungsnummer: **0 369 060 B1**

(12) **EUROPÄISCHE PATENTSCHRIFT**

(45) Veröffentlichungstag der Patentschrift: **25.03.92**

(21) Anmeldenummer: **88119354.4**

(22) Anmeldetag: **21.11.88**

(51) Int. Cl.⁵: **B65G 1/137**

(54) **Kommissionierautomat zur automatischen Kommissionierung und Versandbereitstellung von Artikeln.**

(43) Veröffentlichungstag der Anmeldung:
**23.05.90 Patentblatt 90/21**

(45) Bekanntmachung des Hinweises auf die Patenterteilung:
**25.03.92 Patentblatt 92/13**

(84) Benannte Vertragsstaaten:
**AT BE CH DE ES FR GB GR IT LI LU NL SE**

(56) Entgegenhaltungen:
**EP-A- 0 213 360**
**BE-A- 899 517**
**DE-A- 2 226 769**
**DE-A- 3 311 412**
**FR-A- 1 100 145**

(73) Patentinhaber: **WILTSCHE GMBH**
**Böhmerwaldstrasse 1**
**W-8228 Freilassing(DE)**

(72) Erfinder: **Wiltsche, Norbert, Dipl.-Ing.**
**Böhmerwaldstrasse 1**
**W-82228 Freilassing(DE)**

(74) Vertreter: **Hanke, Hilmar et al**
**Patentanwälte, Dipl.-Ing. Hans Köster**
**Dipl.-Ing., Dipl. Wirtsch, Hilmar Hanke Leo-**
**poldstrasse 77**
**W-8000 München 40(DE)**

**Beschreibung**

Die Erfindung betrifft einen Kommissionierautomat zur automatischen Kommissionierung und Versandbereitstellung von Artikeln aus einem Kommissionierlager mit gegen die Vertikale leicht geneigten Magazinen gemäß Oberbegriff des Anspruchs 1.

Kommissionierautomaten dienen zum automatischen Zusammenstellen von Warensendungen aus einer großen Artikelvielfalt in einem Warenlager.

Ein typisches Einsatzfeld von Kommissionierautomaten ist heute schon der Pharmagroßhandel, wo nachfolgende Merkmale gegeben sind:

- Bis zu 70 000 verschiedene Referenzen am Lager
- Auslieferung zwei- bis fünfmal täglich an jede Apotheke
- Auslieferung innerhalb möglichst kurzer Zeit ab Bestellung, die meist per Datenfernübertragung im Rechnerverbund abläuft
- 10 % der Artikel bestimmten 90 % des Umsatzes.

Vorgenannte Merkmale rechtfertigen in Lagern mit einem Umsatz von mehr als 30 000 Auftragszeilen pro Tag den wirtschaftlichen Einsatz von Kommissionierautomaten, obgleich die zur Zeit auf dem Markt befindlichen Anlagen erhebliche Nachteile aufweisen:

- Der Preis pro Artikel liegt extrem hoch
- Der Flächenbedarf einschließlich Bedienallee pro Artikel beträgt über 0,1 m$^2$
- Die Mindestkapazität pro Artikel liegt bei ca. 1,5 m Stapelhöhe bzw. Regalhöhe, die meist wegen der physikalischen Produkteigenschaften nicht genutzt werden kann und vom Umsatz her nur für wenige Prozent der Artikel gerechtfertigt ist.
- Die Nachfüllfassade besitzt eine schlechte Nutzung im Bereich von unter 50 %.
- Die Steuerung ist kompliziert und empfindlich aufgrund des asynchronen Betriebs der Ausschieber.

Aufbauend auf dem vorgenannten Stand der Technik (siehe z.B. auch BE-A-899.517 oder EP-A-0.213.360) ist es Aufgabe der Erfindung, einen Kommissionierautomaten der eingangs genannten Art zu schaffen, der sehr einfach aufgebaut ist und in Kompaktbauweise zu sehr niedrigen Kosten gefertigt und insbesondere vielseitig in unterschiedlichster Größenkonfiguration wirkungsvoll betrieben werden kann.

Gelöst wird die der Erfindung zugrundeliegende Aufgabe durch die im kennzeichnenden Teil des Anspruchs 1 angegebenen Merkmale.

Vorteilhaft weitergebildet wird der Erfindungsgegenstand durch die Merkmale der Unteransprüche 2 bis 11.

Wesen der Erfindung ist, bei einem Kommissionierautomaten zumindest bei einem oder mehreren Magazinen zwei oder mehrere Ausschieberebenen in unterschiedlicher Höhe vorzusehen, wobei jede Ausschieberebene einer individuellen Artikelsäule zugeordnet ist mit Rücksicht auf den Umsatz des Artikels und auf das Verhältnis von Eigengewicht zur Festigkeit der Verpackung, welches ein gewisses Maß nicht überschreiten darf, damit der zuunterst liegende Artikel von der darüberliegenden Artikelsäule nicht erdrückt wird. Hierbei ist jeder Ausschieberebene zumindest ein eigenes Fördermittel, insbesondere ein angetriebenes Förderband zugeordnet.

Zweckmäßigerweise sind die (über die Gesamthöhe des Kommissionierautomaten sich erstreckenden) Magazine im wesentlichen gleich aufgebaut und mit oder ohne zwischengeordnetem Ausschieber fest miteinander verbunden. Hierbei umfaßt ein Magazin drei im wesentlichen gleich ausgebildete, übereinander angeordnete Einzelmodule.

Die Magazine eines Kommissionierlagers sind vorzugsweise nebeneinander in einer ausgerichteten Reihe und zwei derartige Magazinreihen mit Zwischenraum hintereinander, d.h. gesehen in einer Stirnansicht in der Form eines umgekehrten V angeordnet, wobei im Zwischenraum zwischen den beiden Magazinreihen jeder untersten Ausschieberebene zwei parallele Förderbänder für die Aufnahme der kommissionierten Artikel aus den Ausschiebern und jeder höheren Ausschieberebene ein weiteres Förderband zugeordnet sind.

Die beiden Magazinreihen einschließlich Förderbänder sind zu zwei oder mehreren in Reihe angeordneten im wesentlichen gleich ausgebildeten Regalmodulen zusammengesetzt, wobei sich die zugeordneten in Förderrichtung leicht ansteigenden Förderbänder endseitig geringfügig überlappen und zwischen den Magazinreihen ein zentraler Antrieb für die Ausschieber und die Förderbänder vorgesehen ist.

Der zentrale Antrieb ist vorzugsweise auch als gemeinsamer Antrieb für sämtliche Ausschieber des Kommissionierautomaten vorgesehen und treibt zweckmäßigerweise auch Verbindungsförderbänder kontinuierlich an, welche den vorgenannten Förderbändern nachgeordnet sind und zu einer zentralen Austragstelle führen, um kommissionierte Artikel einem vorbeigetakteten Auftragsbehälter zuzuführen. Durch den zentralen Antrieb, durch Synchronisierung der Steuerung und durch die Kompaktbauweise des Kommissionierautomaten lassen sich die Fertigungs- und Betriebskosten im Vergleich zu bekannten Automaten etwa um die Hälfte reduzieren.

Durch die Modulbauweise eines einzigen Magazins in seiner Höhenerstreckung sowie die Modulbauweise mehrerer nebeneinander angeordneter Magazinreihen (Regalmodule) läßt sich mit Hilfe einfacher baulicher Mittel die Magazinkapazität genau auf den jeweiligen Bedarf einstellen. Es kann die gesamte Stapelhöhe für einen einzigen Artikel genutzt werden, indem die darüberliegenden Ausschieber weggelassen werden. Die niedrigen Fertigungskosten eines einzigen Ausschiebers, welcher sehr kompakt vorzugsweise gemäß Anspruch 7 aufgebaut ist, rechtfertigen auch die Benutzung von zwei oder mehreren Ausschiebern für einen einzigen Artikel, wenn die Magazinhöhe nicht ausreicht. Die Magazinhöhe kann für jeden Artikel in kleinen Abstufungen gewählt werden mit Rücksicht insbesondere auf den Umsatz des Artikels und auf das Verhältnis von Eigengewicht zur Festigkeit der Verpackung. Der Synchronbetrieb gewährleistet, daß sich alle Ausschiebernocken genau gleichzeitig in einer Linie nach vorne bewegen. Durch den Einsatz schmaler und niedriger Ausschieber lassen sich in einem einzigen Magazin übereinander bis zu sechs verschiedenen Artikelsäulen anordnen. Die Artikel können seitlich bis auf einen Trennsteg ganz aneinandergerückt werden.

Von Vorteil ist ferner, daß die Nachfüllfassade bis etwa 80% genutzt werden kann, was zu kürzeren Wegen beim Nachfüllen der Magazine führt und die Gebäudegrundfläche besser nutzt. Der zentrale Antrieb erlaubt eine einfache Anpassung der Geschwindigkeit und den Einsatz einer einfachen robusten Steuerung. Die durch die Erfindung gegebene Blockstruktur gestattet eine einfache Montage eines Kommissionierautomaten, eine einfache Wartung sowie eine einfache Ersatzteilhaltung. Systemerweiterungen können problemlos durchgeführt werden.

Zwar ist ein Kommissionierautomat der eingangs genannten Art aus EP-A-0 213 360 bekannt, wobei angetriebene Ausschieber den stapeluntersten Artikel quer zur Stapelerstreckung ausschieben. Die bekannten Ausschieber sind jedoch hinsichtlich des Antriebsmechanismus vergleichsweise kompliziert getroffen und vergleichsweise inkompakt, da jedem Ausschieber ein pneumatischer Einzelantrieb zugeordnet ist. Durch die Vielzahl der Einzelantriebe geht bodenseitig viel nutzbarer Raum bei einem Magazingestell verloren, welcher nicht für einen Artikelstapel genutzt werden kann. Die einzelnen Antriebe liegen ausschließlich im unteren Bereich eines Magazingestells, so daß die einzelnen Magazine oder Füllschächte nur für Massenartikel geeignet sind.

Aus BE-A-899 517 sind zwar grundsätzlich bei Kommissionierautomaten in unterschiedlicher Höhe angebrachte Ausschieberebenen bekannt. Es finden jedoch keine angetriebenen Ausschieber Verwendung, die ein effektives Kommissionieren gestatten. Die bekannte Vorrichtung läßt sich hinsichtlich des Nachfüllprinzips und des Abführprinzips der einzelnen Artikel mit der Erfindung nicht vergleichen.

Die Erfindung wird nachfolgend anhand eines Ausführungsbeispiels unter Bezugnahme auf die beigefügte Zeichnung näher erläutert; es zeigen:

Fig. 1 in schematischer Stirnansicht einen Kommissionierautomaten mit zwei Magazinreihen, die mit Zwischenraum zueinander gegen die Vertikale geneigt nach oben hin leicht aufeinander zu gerichtet angeordnet sind,

Fig. 2 in schematischer Seitenansicht den Kommissionierautomaten nach Fig. 1,

Fig. 3 eine horizontale Schnittansicht durch den Automaten im Bereich der untersten Ausschieberebene, und

Fig. 4 einen schematischen Vertikalschnitt durch einen Ausschieber, dem oberseitig eine Artikelsäule zugeordnet ist und sich unterseitig eine weitere Artikelsäule anschließt.

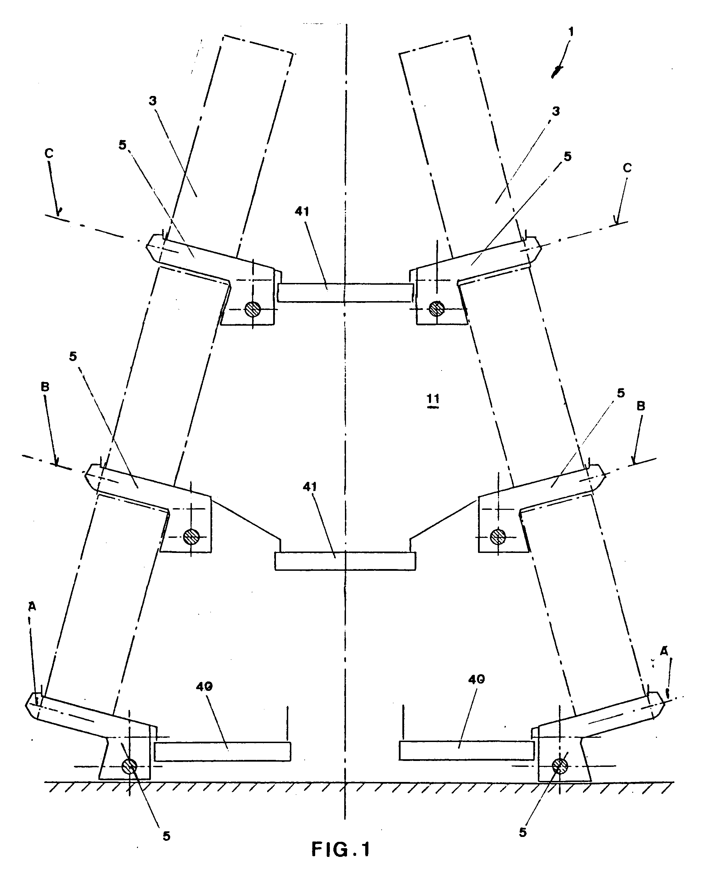

Gemäß Fig. 1 bis 3 ist ein Kommissionierautomat 1 zum automatischen Kommissionieren und Versandbereitstellen von Artikeln aus einem Kommissionierlager gezeigt, welches aus drei Einzelmodulen aufgebaute, in Vertikalrichtung erstreckende Magazine 3 besitzt, die nach oben und nach hinten leicht geneigt sind. In jedem einzelnen Magazin 3, welches eine Bestückungshöhe von 1,50 m bis 1,75 m besitzt, kann eine einzige Artikelsäule oder mehrere übereinanderliegende Artikelsäulen unterschiedlicher Produkte aufgenommen werden. Jeder Artikelsäule sind an unterster Stelle Ausschieber 5 zugeordnet, die gemäß den Fig. 1 bis 3 in unterschiedlichen Ausschieberebenen A, B und C liegen. Die Ausschieber 5 weisen eine schmale und flache Bauweise auf.

Die einzelnen Magazine 3 sind nebeneinander in Reihe angeordnet, wobei gemäß Ausführungsbeispiel der Fig. 1 bis 3 drei Regalmodule D, E und F in Ausrichtung zueinander angeordnet sind.

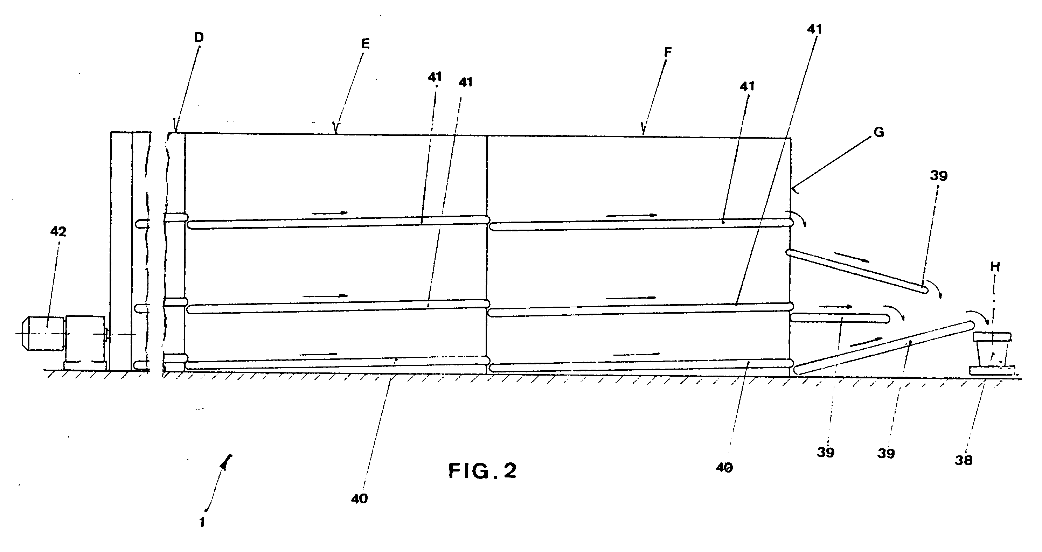

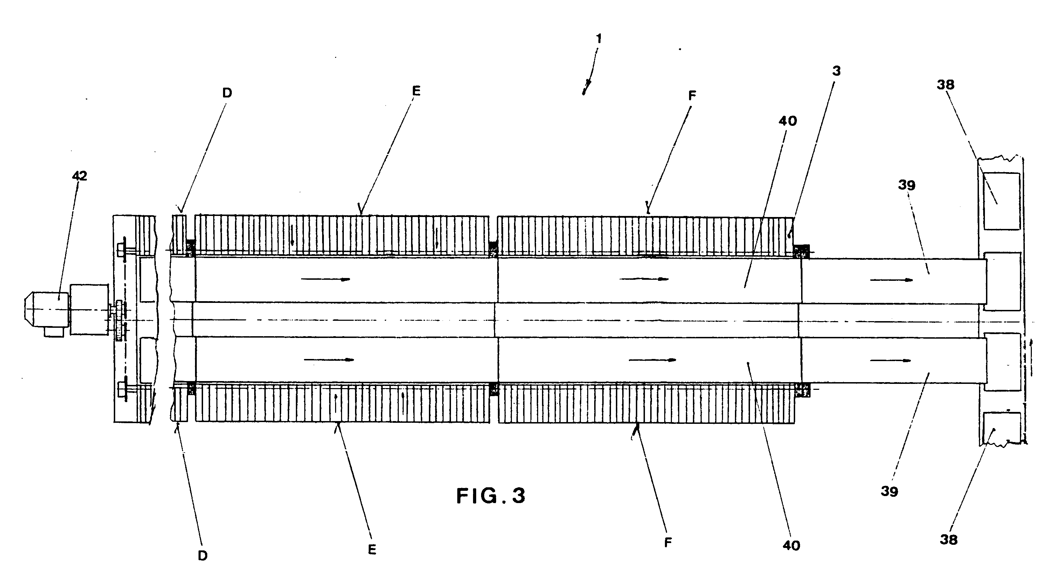

An der der Nachfüllseite der Magazine entgegengesetzten Rückseite 11 der Magazine, d.h. im Zwischenraum zwischen zwei schräg zueinander angeordneten Magazinreihen sind ferner Einzelförderbänder 41 für die höheren Ausschieberebenen B und C vorgesehen sowie zwei parallel zueinander verlaufende Förderbänder 40 bei der untersten Ausschieberebene A. Die vorgenannten Förderbänder 40, 41 besitzen eine Horizontallänge in etwa der Länge eines Regalmoduls D, E und F, wie dies den Fig. 2 und 3 zu entnehmen ist, und sind leicht schräg zueinander geneigt, so daß sie sich im Anschlußbereich überlappen, um kommissionierte durch individuelle Ausschieber 5 ausgestoßene Artikel an die Förderband-Endstelle G zu transportieren und von dort über gerade und/oder schräge Verbindungsförderbänder 39 zu einer zentralen Austragstelle H. An der Austragstelle H werden die kommissionierten geförderten Artikel einem vorbeigetakteten Auftragsbehälter 38 zugeführt und von dort weiter zu einer Verpackungsstelle.

Die Einzelmodule eines Magazins 3 sowie benachbarte Magazine 3 sind miteinander fest verbunden, wie auch die einzelnen Regalmodule D, E und F fest miteinander verbunden, insbesondere verschraubt sind.

Über die gesamte Summe der Länge der einzelnen Regalmodule D, E und F erstrecken sich den einzelnen Ausschiebern 5 zugeordnete Antriebswellen 13, die über ein Verteilergetriebe mit einem zentralen Antrieb 42 antreibend verbunden sind. Mithin wird das antreibende Drehmoment durch das Verteilergetriebe auf die einzelnen durchgehenden Antriebswellen 13 aufgeteilt (im gezeichneten Fall je drei auf jeder Seite). Diese durchgehenden Antriebswellen 13 drehen sich ständig und treiben über ein Getriebe die Sammelförderbänder an. Im Bedarfsfall werden durch Betätigen spezieller Kupplungen in den einzelnen Ausschiebern 5 die Ausschieber mitbewegt bzw. deren Zahnriemen-Förderbänder 4. Da ein zentraler Antrieb 42 platzsparend im an sich günstigen Raum zwischen den beiden Magazinreihen für die gesamte Kommissionieranlage 1 vorgesehen ist, kann die Arbeitsgeschwindigkeit mit einem Frequenzumformer eingestellt werden. Anstelle von über die gesamte Summe der Regalmodule D, E und F sich erstreckende Antriebswellen 13 können auch Antriebswellen in der Länge der einzelnen Regalmodule D, E bzw. F vorgesehen sein, die durch feste Kupplungen miteinander verbunden sind.

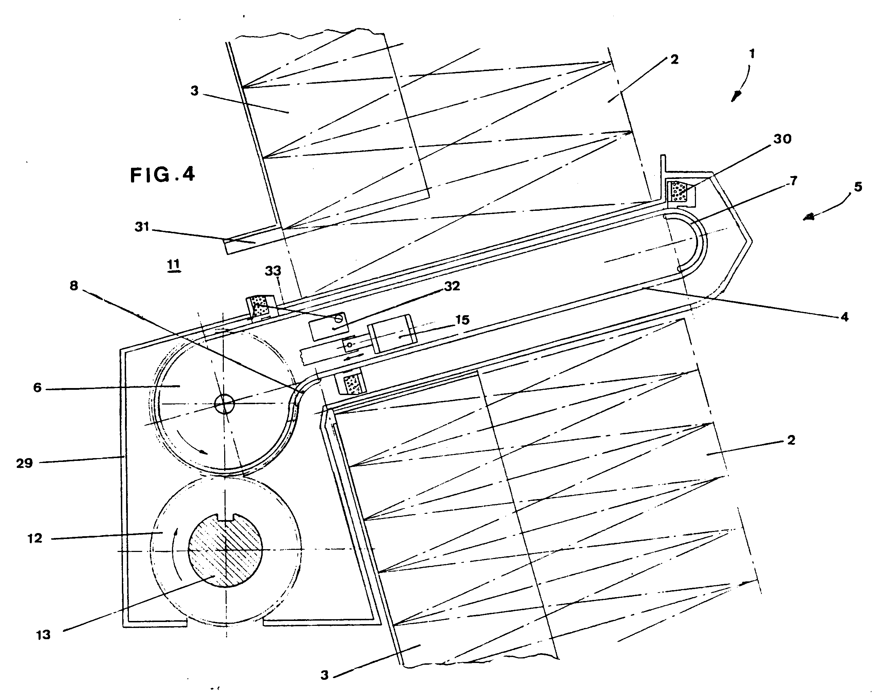

Gemäß Zeichnung umfaßt eine Kommissionieranlage 1 zur automatischen Kommissionierung und Versandbereitstellung von in Artikelsäulen 2 gelagerten Kommissionierartikeln in einem Magazin 3 Ausschieber 5, von denen einer in Fig. 4 dargestellt ist.

Der Ausschieber 5 besitzt insbesondere ein zahnriemengetriebenes Förderband 4, welches außenseitig voneinander gleich beabstandete Ausschiebernocken 30 aufweist. Das Förderband 4 ist durch ein Zahnrad 6 gemäß Fig. 4 im Gegenuhrzeigersinn angetrieben, welches seinerseits mit einem tiefergelegenen Ritzel 12 kämmt, das auf einer langgestreckten gemeinsamen Antriebswelle 13 an entsprechender Stelle befestigt ist. Die Antriebswelle 13 ist durch den zentralen Antrieb 42 angetrieben, beispielsweise durch einen Elektromotor, der mithin alle einzelnen Ausschieber einer Kommissionieranlage 1 antreibt, wobei das Drehmoment in einem Verteilergetriebe auch auf mehrere langgestreckte Antriebswellen aufgeteilt werden kann, sofern dies die Konzeption einer größeren Kommissionieranlage 1 vorsieht. Der gemeinsame Antrieb treibt auch die Förderbänder an, die die ausgeschobenen kommissionierten Artikel zu einer Versandbereitstellung transportieren. Die Arbeitsgeschwindigkeit des zentralen Antriebs kann mit einem Frequenzumformer eingestellt werden.

Das Förderband 4 des Ausschiebers 5 besitzt insbesondere ein mit dem Zahnriemen des Förderbands 4 kämmendes angetriebenes Zahnrad 6, das deutlich größer ist als die andere nichtangetriebene Förderband-Umlenkrolle oder -schiene 7, wobei dem angetriebenen Zahnrad 6 unterseitig eine weitere Umlenkrolle oder -schiene 8 zugeordnet ist, durch die beim angetriebenen Zahnrad 6 ein Förderband-Umschlingungswinkel von nahezu 270° eingerichtet wird.

Der obere Förderbandtrum verläuft parallel zum unteren Förderbandtrum, und es ist dem Parallelabschnitt des Förderbandes 4 oberseitig die Artikelsäule 2 des Magazins 3 zugeordnet.

Ersichtlich sind oberer und unterer Förderbandtrum vergleichsweise dicht voneinander beabstandet, so daß eine geringe Bauhöhe im kritischen Bereich eines Kommissionierregals eingerichtet wird. Dadurch können bei einem einzigen vertikalen, etwas schräg angeordneten Magazins Ausschieber in verschiedenen Ausschieberebenen platzsparend angeordnet werden, nicht nur an unterster Stelle, wie dies beim Stand der Technik möglich ist. Die Magazinhöhe kann für jeden Artikel in kleinen Abstufungen gewählt werden mit Rücksicht auf den Umsatz des Artikels und auf das Verhältnis von Eigengewicht zu Festigkeit der Verpackung.

Zwischen oberem und unterem Förderbandtrum, befindet sich ein Elektromagnet 15, der eine plattige Schaltkurve einer Magnetkupplung betätigt, die in kompakter Bauweise im angetriebenen Zahnrad 6 angeordnet ist.

Der Ausschieber 5 befindet sich insgesamt in einem Gehäuse 29, in welchem insbesondere das durch die Antriebswelle 13 angetriebene Ritzel 12, das angetriebene Zahnrad 6, das Förderband 4, die Umlenkrollen oder -schienen 7, 8 sowie der Elektromagnet 15 angeordnet sind. Das Gehäuse 29 weist insbesondere im Bereich der Oberseite des oberen Förderbandtrums eine Aussparung auf, durch die die Ausschiebernocken 30 bei einer Drehung in einen Eingriff mit einem auszuschiebenden Artikel gelangen können.

An der Rückseite 11 des Magazins 3, an welcher sich insgesamt der Antrieb des Ausschiebers 5 befindet, ist ferner ein Niederhalter 31 vorgesehen, der bei einem Ausschieben eines kommissionierten Artikels letzteren definiert einem Förderband zuführt.

Im oder am Gehäuse ist ferner ein Zählschalter 32 vorgesehen, dessen federnde Zunge 33 bei einem Ausschieben eines Artikels niedergedrückt wird und dadurch den Zählschalter 32 um einen Zählschritt betätigt.

**Patentansprüche**

1. Kommissionierautomat (1) zur automatischen Kommissionierung und Versandbereitstellung von Artikeln aus dem Kommissionierlager mit gegen die Vertikale leicht geneigten Magazinen (3), in denen die Artikel gestapelt sind und diese an der leicht geneigten Magazin-Flanke anliegen, wobei ein angetriebener Ausschieber (5) den stapeluntersten Artikel quer zur Stapelerstreckung ausschiebt, dadurch gekennzeichnet, daß ein oder mehrere Magazine (3) zumindest zwei Ausschieberebenen (A, B, C) in unterschiedlicher Höhe aufweisen, wobei jede Ausschieberebene (A, B, C) einem individuellen Artikelstapel (2) und jeder Ausschieberebene (A, B, C) zumindest ein eigenes Fördermittel zugeordnet ist.

2. Kommissionierautomat nach Anspruch 1, dadurch gekennzeichnet, daß das eigene Fördermittel ein angetriebenes Förderband (40 bzw. 41) ist.

3. Kommissionierautomat nach Anspruch 1 oder 2, dadurch gekennzeichnet, daß die Magazine (3) im wesentlichen gleich aufgebaut und mit oder ohne zwischengeordnetem Ausschieber (5) fest miteinander verbunden sind.

4. Kommissionierautomat nach Anspruch 3, dadurch gekennzeichnet, daß ein Magazin (3) drei im wesentlichen gleich ausgebildete übereinander angeordnete Einzelmodule umfaßt.

5. Kommissionierautomat nach Anspruch 4, dadurch gekennzeichnet, daß die Magazine (3) eines Kommissionierlagers nebeneinander in einer ausgerichteten Reihe und zwei derartige Magazinreihen mit Zwischenraum hintereinander, d.h. gesehen in einer Stirnansicht in umgekehrter V-Form angeordnet sind, wobei im Zwischenraum zwischen den beiden Magazinreihen jeder untersten Ausschieberebene (A) zwei parallele Förderbänder (40) für die Aufnahme der kommissionierten Artikel aus den Ausschiebern (5) und jeder höheren Ausschieberebene (B, C) ein weiteres Förderband (41) zugeordnet sind.

6. Kommissionierautomat nach einem der Ansprüche 1 bis 5, dadurch gekennzeichnet, daß sämtliche Ausschieber (5) durch einen gemeinsamen Antrieb (42) angetrieben sind.

7. Kommissionierautomat nach Anspruch 5 oder 6, dadurch gekennzeichnet, daß die beiden Magazinreihen einschließlich Förderbänder (40, 41) zu zwei oder mehreren hintereinander angeordneten Regalmodulen (D, E, F) zusammengesetzt sind, wobei sich die zugeordneten in Förderrichtung leicht ansteigenden Förderbänder (40, 41) endseitig geringfügig überlappen und zwischen den Magazinreihen ein zentraler Antrieb (42) für die Ausschieber (5) und die Förderbänder (40,41) vorgesehen ist.

8. Kommissionierautomat nach einem der Ansprüche 1 bis 7, dadurch gekennzeichnet, daß Ausschieber (5) im Bereich des Magazins (3) mit einem einen Ausschiebernocken (30) aufweisenden umlaufenden Zahnriemen-Förderband (4) vorgesehen sind, dessen Ausschiebestrecke von zwei Umlenkelementen (6,7) begrenzt wird, wobei das eine Umlenkelement ein mit dem Zahnriemen kämmendes angetriebenes Zahnrad (6) ist, dessen Umlenkradius größer ist als der Umlenkradius des anderen nichtangetriebenen Umlenkelements, das als Förderband-Umlenkrolle oder -schiene (7) ausgebildet ist, wobei dem angetriebenen Zahnrad (6) unterseitig eine weitere Förderband-Umlenkrolle oder -schiene (8) zugeordnet ist, durch die ein Förderband-Umschlingungswinkel beim angetriebenen Zahnrad (6) von mehr als 180°, vorzugsweise ca. 270°, eingerichtet wird, und im Betrieb des Kommissionierautomaten (1) der zentrale Antrieb (42) die Förderbänder (40, 41) kontinuierlich antriebt und der einem zu kommissionierenden Artikel zugeordnete Ausschieber (5) über eine Magnetkupplung zuschaltbar ist.

9. Kommissionierautomat nach Anspruch 6, dadurch gekennzeichnet, daß einer Artikelsäule (2) zwei oder mehrere Ausschieber (5) zugeordnet, d.h. zwei oder mehrere Ausschieber (5) nebeneinander angeordnet sind.

10. Kommissionierautomat nach einem der Ansprüche 1 bis 7, dadurch gekennzeichnet, daß den Förderbändern (40, 41) Verbindungsförderbänder (39) nachgeordnet sind, die zu einer zentralen Austragsstelle (H) führen, um kommissionierte Artikel einem vorbeigetakteten Auftragsbehälter (38) zuzuführen.

11. Kommissionierautomat nach Anspruch 9 oder 10,
dadurch gekennzeichnet,
daß die Verbindungsförderbänder (39) durch den zentralen Antrieb (42) kontinuierlich angetrieben sind.

**Claims**

1. A retrieval system (1) for the automatic selection and orderly grouping of articles stemming from the retrieval store having cribs (3) slightly inclined to the vertical in which the articles are stacked in contact with the slightly inclined flank of the crib, a powered dispenser (5) being provided to dispense the bottommost article transversely from the elongation of the stack,
characterized in that
one or more cribs (3) feature at least two dispensing levels ( A,B.C ) at differing levels, each dispensing level ( A,B,C ) being assigned an individual stack of articles (2) and each dispensing level ( A,B.C ) having at least one assigned conveyor means.

2. A retrieval system for the automatic selection and orderly grouping of articles according to claim 1, wherein said assigned conveyor means is a powered conveyor band ( 40 or 41 ).

3. A retrieval system for the automatic selection and orderly grouping of articles according to claim 1 or 2, wherein said cribs (3) have substantially an identical configuration and are firmly connected together with or without an interposed dispenser (5).

4. A retrieval system for the automatic selection and orderly grouping of articles according to claim 3, wherein one such crib (3) comprises three separate modules arranged one above the other and each substantially identical.

5. A retrieval system for the automatic selection and orderly grouping of articles according to claim 4, wherein said cribs (3) of a retrieval store are arranged shoulder-to-shoulder in an orderly row and two such rows of cribs are arranged one behind the other with a space inbetween, i.e. when viewed from the front in an inverse vee formation, two parallel conveyor bands (40) for receiving the retrieved articles from the dispensers (5) being provided in the space between the two rows of cribs of each bottommost dispensing level (A) and a further conveyor band (41) being assigned to each higher dispensing level (B, C)

6. A retrieval system for the automatic selection and orderly grouping of articles according to any of the claims 1 thru 5, wherein all dispensers (5) are powered by a common drive (42).

7. A retrieval system for the automatic selection and orderly grouping of articles according to claim 5 or 6, wherein the two crib rows including the conveyor bands (40,41) are grouped together to form two or more rack modules ( D,E.F) arranged one behind the other, said assigned conveyor bands (40,41) slightly inclined in the direction of conveyance slightly overlap at their ends and a central drive (42) being provided between the crib rows for the dispensers (5) and the conveyor bands (40,41).

8. A retrieval system for the automatic selection and orderly grouping of articles according to any of the claims 1 thru 7, wherein dispensers (5) are provided in the region of the crib (3) featuring a circulating tooth belt conveyor band (4) having a dispenser cam (30), the dispensing length being limited by two deflection members ( 6,7), one of which is a driven pinion (6) meshing with said tooth belt, the deflection radius of said pinion being larger than that that of the other non-driven deflection member, having the form of a conveyor band deflector pulley or rail (7), said driven pinion (6) being assigned underneath a further conveyor band deflector pulley or rail (8) by means of which the conveyor band wrap angle is more than 180° and preferably approx. 270° at the driven pinion, and in operation of the retrieval system the central drive (42) continuously drives the conveyor bands ( 40,41 ) and the dispenser (5) assigned to one of the articles to be retrieved can be activated via a magnetic coupling.

9. A retrieval system for the automatic selection and orderly grouping of articles according to claim 6, wherein an article column (2) is assigned two or more dispensers (5), i.e. two or more dispensers (5) arranged one alongside the other.

10. A retrieval system for the automatic selection and orderly grouping of articles according to any of the claims 1 thru 7, wherein said conveyor bands ( 40, 41 ) are followed by connecting conveyor bands ( 39 ) leading to a central discharge station (H) to supply retrieved articles to a job bin (38) which is clocked to move past.

11. A retrieval system for the automatic selection and orderly grouping of articles according to claim 9 or 10, wherein said connecting conveyor bands (39) are continuously driven by said central drive ( 42 ).

**Revendications**

1. Appareil automatique (1) destiné à rassembler et à préparer automatiquement, en vue de leur expédition, les articles provenant de l'entrepôt, comprenant des chargeurs (3) légèrement inclinés par rapport à la verticale dans lesquels les articles sont empilés en étant appuyés sur le flanc légèrement incliné du chargeur, un poussoir (5) entraîné poussant le dernier article se trouvant en-dessous de la pile transversalement au sens de la pile,
caractérisé en ce que
un ou plusieurs chargeurs (3) comportent au moins deux plans de collectage (A, B, C) situés à des hauteurs différentes, chaque plan de collectage (A, B, C) étant associé à une pile d'articles (2) individuelle et au moins à un système d'acheminement qui lui est propre.

2. Appareil automatique selon la revendication 1, caractérisé en ce que
ce système d'acheminement est une bande transporteuse entraînée (40 et 41).

3. Appareil automatique selon la revendication 1 ou 2, caractérisé en ce que
les chargeurs (3) sont essentiellement montés de manière identique et qu'ils sont solidarisés, avec ou sans poussoir (5) intercalé.

4. Appareil automatique selon la revendication 3, caractérisé en ce que
un chargeur (3) se compose de trois modules indépendants superposés réalisés de manière sensiblement identique.

5. Appareil automatique selon la revendication 4, caractérisé en ce que
les chargeurs (3) d'un entrepôt d'expédition sont juxtaposés en formant une rangée et que deux de ces rangées de chargeurs sont disposées l'une derrière l'autre, avec un espace intermédiaire les séparant, c'est-à-dire qu'ils ont, vus de face, la forme d'un V renversé, et avec, dans l'espace séparant les deux rangées de chargeurs, deux bandes transporteuses parallèles (40) pour chaque plan inférieur de collectage (A) destinées à recevoir les articles présentés par les poussoirs (5), et une autre bande transporteuse (41) pour chaque plan de collectage supérieur (B, C).

6. Appareil automatique selon l'une quelconque des revendications 1 à 5, caractérisé en ce que
tous les poussoirs (5) sont entraînés par un mécanisme d'entraînement commun (42).

7. Appareil automatique selon la revendication 5 ou 6, caractérisé en ce que
les deux rangées de chargeurs, bandes transporteuses (40, 41) comprises, sont assemblées selon deux ou plusieurs modules (D, E, F) disposés l'un derrière l'autre, les bandes transporteuses correspondantes (40, 41), faiblement inclinées vers le haut dans le sens du déplacement, se superposant légèrement au niveau de leur extrémité, et un mécanisme central d'entraînement (42) des poussoirs (5) et des bandes transporteuses (40, 41) étant prévu entre les rangées de chargeurs.

8. Appareil automatique selon l'une quelconque des revendications 1 à 7, caractérisé en ce que
sont prévus au niveau du chargeur (3) des poussoirs (5) avec une courroie d'entraînement dentée (4) circulante présentant un ergot (30) et dont la course est limitée par deux éléments de renvoi (6, 7), l'un de ces éléments de renvoi étant une roue dentée entraînée (6) engrénée avec la courroie dentée (6), dont le rayon est plus grand que celui de l'autre élément de renvoi, non entraîné, qui se présente comme une poulie de guidage ou rail de renvoi (7) de la courroie d'entraînement, la roue dentée entraînée (6) étant associée, côté inférieur, à une autre poulie de guidage ou rail de renvoi (8) de la courroie d'entraînement formant un angle d'enroulement de la courroie d'entraînement de la roue dentée entraînée (6) de plus de 180°, de préférence de 270° environ, et, lorsque l'appareil automatique (1) est en fonctionnement, le mécanisme central d'entraînement (42) entraînant de manière continue les bandes transporteuses (40, 41), le poussoir (5) affecté à un article à préparer pour l'expédition pouvant être activé par l'intermédiaire d'un accouplement magnétique.

9. Appareil automatique selon la revendication 6, caractérisé en ce qu'à

une colonne d'article (2) correspondent deux ou plusieurs poussoirs (5), c'est-à-dire que deux ou plusieurs poussoirs (5) sont juxtaposés.

10. Appareil automatique selon l'une quelconque des revendications 1 à 7, caractérisé en ce que,
à la suite des bandes transporteuses (40, 41) sont disposées des bandes transporteuses de jonction (39) qui mènent à un point de distribution central (H) afin d'acheminer les articles préparés vers un conteneur (38) passant de manière cadencée.

11. Appareil automatique selon la revendication 9 ou 10, caractérisé en ce que
les bandes transporteuses de jonction (39) sont entraînées de manière continue par le mécanisme central d'entraînement (42).

FIG.1

FIG. 2

FIG.3

FIG.4